# EUROPEAN PATENT SPECIFICATION

(11) **EP 1 910 246 B1**
(45) Date of publication and mention of the grant of the patent: **02.11.2011**
(21) Application number: 06800553.7
(22) Date of filing: 28.07.2006
(51) Int. Cl.: C04B 35/111, C04B 35/443, C04B 35/486, C04B 35/14, C04B 35/44

(54) **METHOD FOR PRODUCING DENSE BLOCKS**
VERFAHREN ZUR HERSTELLUNG DICHTER BLÖCKE
METHODE DE PRODUCTION DE BLOCS DENSES

(30) Priority: 02.08.2005 US 704718 P
(43) Date of publication of application: 16.04.2008
(60) Divisional application: 10010935.4
(73) Proprietor: MOGILEVSKY, Radion, Lake Forest IL 60045 (US)
(72) Inventor: MOGILEVSKY, Radion, Lake Forest IL 60045 (US)
(74) Representative: Müller-Boré & Partner Patentanwälte
(86) International application number: PCT/US2006/029745
(87) International publication number: WO 2007/016489

(56) References cited:
- WO-A2-02/057196
- GB-A- 1 339 963
- JP-A- 57 149 833
- US-A1- 2004 025 542
- WILLIAMS D T ET AL: "Plasma heat transfer in verneuil crystal growth" JOURNAL OF THE AMERICAN CERAMIC SOCIETY USA, vol. 51, no. 1, 21 January 1968 (1968-01-21), pages 32-37, XP002411208
- REED T B: "Growth of refractory crystals using the induction plasma torch" JOURNAL OF APPLIED PHYSICS USA, vol. 32, no. 12, December 1961 (1961-12), pages 2534-2535, XP002411209

## Description

The invention relates generally to production of dense high purity materials to be used in crystal growth processes. Specifically, a method is provided for producing blocks of high purity dense alumina (Al₂O₃) which includes the steps of generating plasma, delivering alumina particles into the plasma, melting the alumina particles, depositing melted particles onto a substrate, forming a layer of the melted aluminum oxide at the surface of the substrate that can be moved into three independent directions (back and forth horizontal movement, rotation movement and vertical pull down) to produce dense alumina blocks. The method may be used to prepare blocks of other high purity dense materials such as aluminum-magnesium spinel, and zirconium oxide.

Sapphire (Al₂O₃) is widely used material due to its unique properties. Recently sapphire found its application in production of LED (light emitting diodes). Sapphire crystals are produced utilizing several crystal growth processes such as Czochralski (CZ), Kyropoulos, Heat Exchange Method (HEM), Horizontally Directed Solidification Method (HDSM) and EFG (Stepanov). In these processes, raw material made of Al₂O₃ and referred to "crackles" is loaded into a crucible, melted arid the crystal growth process is then initiated. In order to obtain the highest yield of product, it would be highly desirable to load the crucible at the maximum capacity with crackle of the highest purity.

To date, there is no specially designed method to produce crackles of sufficient purity and density to grow sapphire crystals. Sapphire crystal growers are using as crackle material that is either left over from their processes or sapphire crystals grown by a flame fusion method commonly referred to as the Vemuil method. In the Vemuil method, alumina powder is delivered into oxygen-hydrogen flame, melted and deposited on seed crystal. The crystals produced by this method, however, are limited in diameter (up to 3,81 cm (1,5")) and may be contaminated due to cross contamination from production of colored-gem grade crystals containing different doping elements. Moreover, the Vemuil method is unsafe as it employs flammable mixtures of oxygen and hydrogen.

Accordingly, a method for producing high purity and dense alumina blocks of any predetermined diameter for use as crackle is highly desirable. Moreover, a method for producing blocks of other high purity dense materials such as aluminum-magnesium spinel and zirconium oxide is also highly desirable. The dense high purity blocks prepared by the present invention are useful for any suitable purposes such as crackles to grow crystals and high purity, high density ceramics.

Further, WO-A-0 257 196 describes a transparent ceramics which exhibits favorable slope efficiency when employed in solid lasers, as well as a production method therefor.

The present invention relates to a method for preparing purified dense products with a predetermined diameter. The blocks may have any desired shape such as a cylindrical shape. Generally, particles of starting material such as alumina are delivered into plasma and are melted using plasma to form melted particles (also referred to as liquid or melt). The melted particles are then deposited onto a deposition substrate. The substrate is located on a support which is part of a mechanism or device that provides three independent movements and means for regulating the movements. When deposited, the melted particles forms a liquid layer on the substrate which then undergoes directional solidification to allow for further purification of the starting materials. If doping materials are used, melted doped material, e.g., melted doped alumina, forms a solid layer on the substrate so as to prevent segregation of the doping material. The method of the present invention is particularly useful for making dense purified alumina blocks and can be extended to prepare purified dense blocks of any desired shape or other high melting point substances such as aluminum-magnesium spinel and zirconium oxide. While any suitable size of particles may be used, generally particles having a particle size ranging from 0.1 µm to 500 µm are used. The purity level of the purified dense block depends in part on the purity level of the starting material. Purity levels up to 99.999% are achieveable by the method of the present invention.

In one embodiment of the invention, a method for producing a purified dense alumina block of predetermined diameter is provided. The method comprising the steps of: generating plasma; delivering alumina particles into the plasma so as to melt the particles and form a liquid alumina; depositing the liquid alumina onto a deposition substrate and forming a layer of liquid alumina on the surface of the substrate while moving the deposition substrate in three independent directions including rotation along its vertical axis, back and forth translation motion along its horizontal axis, and pull down motion along its vertical axis to produce the purified dense alumina block. While any suitable size of particles may be used, generally the alumina particles have a particle size ranging from 0.1 µm to 500 µm. The purity level of the purified dense alumina block depends in part on the purity level of the starting material. Purity levels up to 99.999% are achieveable by the method of the present invention. The plasma may be generated by any suitable means, including induction with a high frequency generator.

In another embodiment, a method for producing a purified dense doped alumina block of predetermined diameter is provided. The method comprising the steps of: mixing particles of alumina and doping material to form uniform mixture; generating plasma; delivering the uniform mixture into the plasma so as to melt the particles and form a liquid; depositing the liquid onto a deposition substrate and forming a layer of solid doped alumina while moving the deposition substrate in three independent directions including rotation along its vertical axis, back and forth translation motion along its horizontal axis, and pull down motion along its vertical axis so as to produce the purified dense doped alumina block. While any suitable size of particles may be used, the alumina and doping particles generally have a particle size ranging from 0.1 µm to 500 µm. The purity level of the purified dense doped alumina block depends in part on the purity levels of the starting alumina and doping materials employed. Purity levels up to 99.999% are achieveable by the method of the present invention. Any suitable doping material may be used, including, without limitation, Ti, Cr, Mn, Ni, Fe, V or a mixture of two or more of the foregoing. The plasma may be generated by any suitable means, including induction with a high frequency generator.

In another embodiment of the invention, a method for producing a purified dense aluminum-magnesium spinel block of predetermined diameter is provided. The method comprising the steps of: generating plasma;
delivering particles of aluminum oxide and magnesium oxide into the plasma so as to melt the particles and form a liquid; depositing the liquid onto a deposition substrate while moving the deposition substrate in three independent directions including rotation along its vertical axis, back and forth translation motion along its horizontal axis, and pull down motion along its vertical axis to produce the purified dense aluminum-magnesium spinel block. While any suitable size of particles may be used, generally the aluminum-magnesium spinel particles have a particle size ranging from 0.1 µm to 500 µm. The purity level of the purified dense aluminum-magnesium spinel block depends in part on the purity level of the starting material and doping materials if used. Purity levels up to 99.999% are achieveable by the method of the present invention. The plasma may be generated by any suitable means, including induction with a high frequency generator.

In one aspect of this embodiment, the melted particles form a liquid layer when deposited on the surface of the substrate.

In another aspect of this embodiment, the particles further comprise doping material and the melted particles form a solid layer when deposited on the surface of the substrate. Any suitable doping material may be used including, without limitation, Fe, Ni or Co.
Fig. 1 illustrates a system for producing dense alumina blocks using RF plasma torch with powder delivery system thru the water cooled probe located inside plasma torch.
Fig. 2 illustrates a system for producing dense alumina blocks using RF plasma torch with powder delivery system thru the injector system.

Embodiments of the invention provide a method for producing a high purity dense alumina blocks (as well as other high purity dense blocks of other materials) with different diameters using a plasma or a flame from a heat energy supply means, preferably inductively coupled radio-frequency (RF) plasma. High purity alumina blocks produced by this method can be used for any suitable purpose such as raw material (crackles) to grow sapphire crystals utilizing a variety of methods such as Kiropoulos, HEM, Cz, and EFG (Stepanov), or as high purity, high density ceramics.

Referring to Fix.1, a representative inductively coupled radio-frequency (RF) plasma torch 8 is schematically shown. Plasma torch 8 is mounted on stainless steel water cooled reactor **14.** Typically, the plasma torch **8** is made of water cooled copper sections and protected from discharges by quartz tube **9** placed between plasma torch and induction coil **7** (cut-away shown). Water coolers **5** and **6** are used to cool the plasma torch **8** during plasma generation. The torch is placed inside induction coil **7** that is part of RF generator system (not shown on this schematic drawing). Representative examples of suitable plasma torches are shown in U.S. Patent Nos. 3,401,302 and 5,200, 595. The choice of a plasma torch does not restrict the generality of the method which can be implemented by any other means for delivering heat energy and creating a temperature suitable to melt alumina and other high-temperature materials. During operation, plasma-generating gases are introduced into the plasma torch and the induction coil 7 generates highfrequency alternating magnetic field which ionizes the gases to generate the plasma 10. Any suitable plasma-generating gas may be used including, without limitation, air, nitrogen, argon, helium or mixtures thereof with the addition of hydrogen. The particles of high melting materials such as alumina to be melted is delivered through water-cooled probe 4 having water coolers 2 and 3 thru feeding tube 1 from a powder feeder (not shown). Due to the extremely high temperature in the plasma (above 10,000 °C), the particles of alumina or other high melting materials are melted and impurities evaporate. Any suitable size of particles may be used. Generally, particle sizes ranging from 0.1 µm to 500 µm are used. The melted particles, in the form of a liquid, e.g., liquid alumina, are then deposited onto a substrate **12,** usually made of alumina or other suitable material. The deposited liquid alumina forms a liquid layer (if undoped alumina particles are used) or a solid layer (if-mixture of alumina and doped particles are used) on the substrate surface.

When the melted particles reach the substrate, it may solidify immediately or form a liquid layer on the surface of the substrate which undergoes directional solidification, depending on the position of the substrate to the plasma torch. If the distance between the substrate and the plasma torch is relatively close, the energy of the plasma will heat up the surface of the substrate and keep the deposited melted particles in its liquid state. However, if the distance between the substrate and plasma torch is far enough such that the energy of the plasma is not sufficient to keep the deposited melted particles in a liquid state, the melted particles will immediately solidify on deposit onto the substrate surface. Maintaining the condition of a liquid layer is important to allow for the dual purification (discussed below) of undoped alumina, aluminum magnesium spinel, zirconia and other high melting materials having a melting temperature of 1000°C or greater. In contrast for doped high melting materials, maintaining the uniform distribution of doping material in the highly purified dense block is desired and this is achieved by preventing the formation of a liquid layer on the surface of the substrate. Thus, uniformly mixed particles of a high melting substance, e.g., alumina and doping material, are melted by the plasma torch and the melted particles are deposited onto the substrate where it undergoes immediate solidification on the surface of the substrate. No transport of doping material will occur.

Assuming that undoped alumina was deposited onto the substrate to form a liquid layer, as the liquid directionally solidifies on the substrate, additional purification takes place where the impurities with a distribution coefficient less than one are rejected into the melt from the solid-liquid interface and are further solidified on the outer most part of the block. This part of the block containing impurities can simply be mechanically removed off the block via any suitable means including the use of a diamond saw. The substrate **12** is located on support **13** that allows for rotation along its vertical axis, a reversible horizontal translation movement and pulling down movement along the vertical axis that allows for uniform deposit alumina on substrate to form a dense block of purified alumina **11.** By empirically adjusting the parameters of feeding powder speed, rotation speed, amplitude and speed of horizontal translation, and pulling down speed on device 15 and position of the substrate inside the plasma torch , purified dense blocks of alumina or other high-melting substances having a desired diameter and shape may be produced. These three motions may be generated by any suitable means including the use of motors. In addition to providing alumina blocks of any desired diameter and shape, the method of the invention provides purified blocks by a double purification by the processes of evaporation and directional solidification. Table 1 below lists the impurity levels of the starting alumina and finished alumina blocks produced by the present method. Impurity concentrations before purification (starting material) and after purification (densified blocks) were measured using a Glow Discharge Mass Spectrometer (VG 9000).

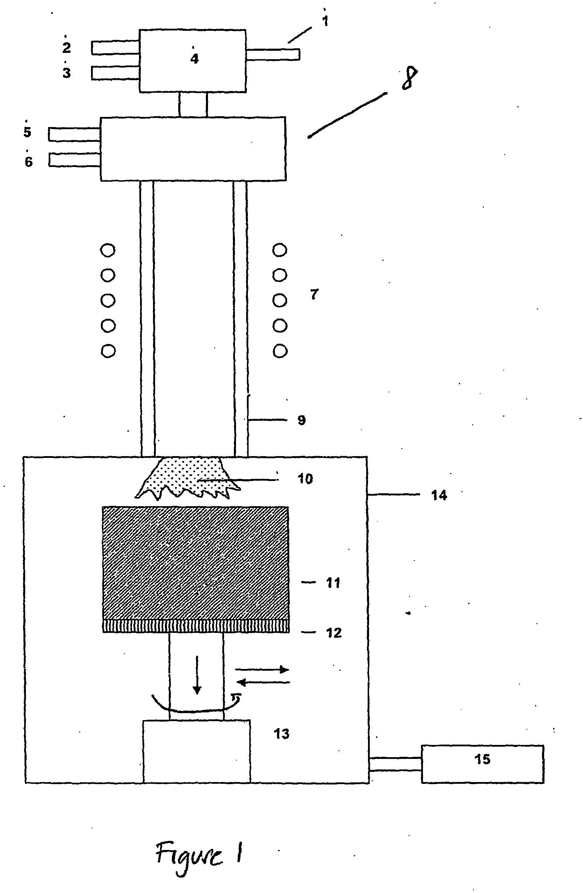

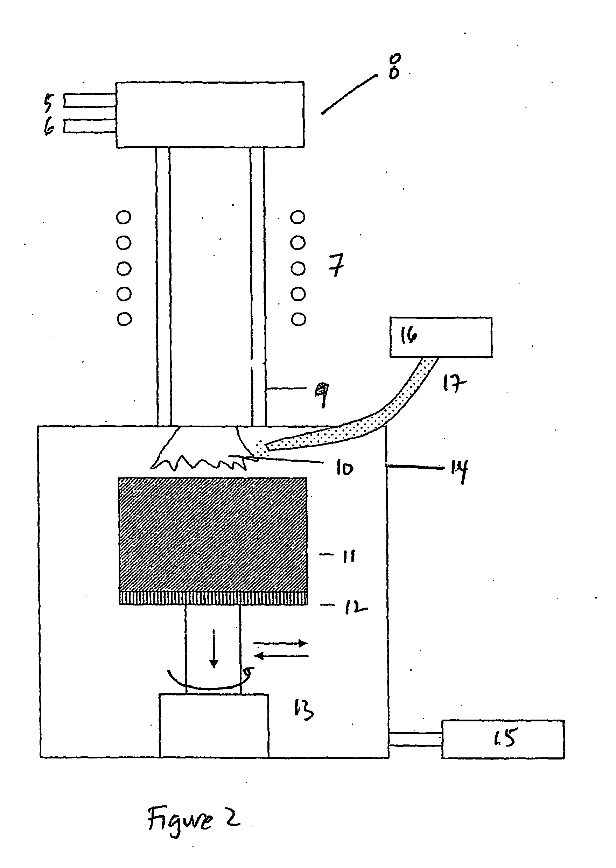

Fig. 2 is similar to Fig. 1. Referring to Fig. 2, the powder stored in feeder **16** is fed to the plasma flame **10** thru water cooled injector **17** that is connected to the powder feeder **16.** The injector **17** delivers alumina powder into the plasma flame **10.** All other components of the design are similar to identically numbered components shown and described for Fig. 1.

It has been surprisingly discovered that all three movements during molten alumina (or other high melting material) deposition onto the substrate are needed in order to produce dense uniform blocks of material having high melting temperature (such as alumina) of a desired diameter and shape. Drouart et al EP 1281680A2 (US 631,628 B2) described a method for purifying silica and depositing the silica on an optical fiber preform that employed two movements (rotation and back and forth reversible movement along a horizontal axis). While the reported Drouart method is said to be useful for producing blocks of fused silica, such method does not work for alumina as alumina has a much higher melting point (2050°C) and thermal conductivity and thus cannot be deposited in a controlled and uniform manner onto a perform by the Drouart method as there is a risk of bending and cracking of the resultant product due to thermal stresses.

Ball et all (U.S. patent publications US 20030027055, US 20040050098, US20040025542) described a method of purifying silica and depositing silica on substrates that employed two movements (rotation and pulling down motions). While the reported Ball method is said to be useful for producing substrates of fused silica, and possibly can be used to produce blocks of fused silica; such methods does not work for alumina as alumina has a much higher melting point (2050°C) and thermal conductivity and thus cannot be deposited in a controlled and uniform manner onto substrates by the Ball method. The Ball method produced products of limited diameters, even for producing fused silica, due to the fact that the diameter of deposited substrate is limited by the diameter of the plasma torch which in turn has a diameter in range of 50-100 mm. In contrast, highly purified dense blocks of high melting materials (1000°C and above) of a pre-determined diameter and shape can be surprisingly produced by the method of the claimed invention.

**Table 1**

| | **Example 1** | | **Example 2** | | **Example 3** | |
|---|---|---|---|---|---|---|
| **Element (ppm)** | **Starting Material** | **Densified Block** | **Starting Material** | **Densified Block** | **Starting Material** | **Densified Block** |
| | | | | | | |
| B | 0.20 | 0.01 | 2 | 0.70 | 1 | 0.4 |
| O | matrix | matrix | matrix | Matrix | matrix | matrix |
| .Na | 9.80 | 0.40 | 1981 | 150.00 | 697 | 37 |
| Mg | 6.30 | 1.20 | 16 | 1.40 | 32 | 3.4 |
| Al | matrix | matrix | matrix | Matrix | matrix | matrix |
| Si | 15.50 | 0.98 | 65 | 5.60 | 45 | 3.9 |
| P | 1.20 | 0.07 | 2.6 | 0.20 | 1 | 0.09 |
| S | 14.90 | 0.18 | 117 | 11.00 | 42 | 4.1 |
| Cl | 1,150.00 | 0.30 | 234 | 0.21 | 358 | 0.28 |
| Ca | 8.80 | 0.17 | 195 | 12.60 | 138 | 9.8 |
| Ti | 1.00 | 0.05 | 33 | 5.50 | 14 | 2.3 |
| Cr | 2.30 | 0.05 | 28 | 3.20 | 107 | 6.7 |
| Mn | 0.10 | 0.02 | 0.7 | 0.60 | 4 | 0.2 |
| Fe | 4.90 | 0.25 | 111 | 23.00 | 610 | 78 |
| Ni | 0.27 | 0.05 | 26 | 0.80 | 4 | 0.1 |
| Cu | 0.40 | 0.10 | 1.5 | 0.10 | 25 | 0.4 |
| Zn | 0.80 | 0.16 | 40 | 4.40 | 26 | 2.9 |
| Ga | 0.04 | 0.03 | 99 | 6.20 | 163 | 9.8 |
| Zr | 0.54 | 0.07 | 3.5 | 0.60 | 0.25 | 0.02 |
| Nb | 0.12 | 0.01 | 0.1 | 0.10 | 0.2 | 0.02 |
| Mo | 0.50 | 0.20 | 0.5 | 0.25 | 0.2 | 0.1 |
| Hf | 0.60 | 0.12 | 0.5 | 0.30 | 0.5 | 0.3 |
| Ta | sec. cathode | sec. cathode | sec. cathode | see.cathode | sec. cathode | sec.cathode |
| W | 0.50 | 0.07 | 0.5 | 0.40 | 1 | 0.5 |
| Re | 0.02 | 0.01 | 0.02 | 0.01 | 0.02 | 0.01 |
| Au | 0.04 | 0.02 | 0.02 | 0.02 | 0.06 | 0.04 |
| Pb | 5.80 | 0.20 | 27 | 0.40 | 39 | 0.6 |

## Claims

1. A method for producing a purified dense alumina block of predetermined diameter, said method comprising the steps of:
generating plasma;
delivering alumina particles into the plasma so as to melt the particles; and
depositing the melted particles onto a deposition substrate while moving the deposition substrate in three independent directions including rotation along its vertical axis, back and forth translation motion along its horizontal axis, and pull down motion along its vertical axis to produce the purified dense alumina block.

2. The method of claim 1, wherein the alumina particles have a particle size ranging from 0.1 µm to 500 µm.

3. The method of claim 1, wherein the plasma is generated by induction with a high frequency generator.

4. The method of claim 1, wherein the purified dense alumina block has a purity level up to 99.999%.

5. The method of claim 1, wherein the melted particles form a liquid layer when deposited on the surface of the substrate.

6. The method of claim 1, wherein the particles further comprise doping material and the melted particles form a solid layer when deposited on the surface of the substrate.

7. The method of claim 6, wherein the doping material comprises Ti, Cr, Mn, Ni, Fe, V or a mixture of two or more of the foregoing.

8. A method for producing a purified dense aluminum-magnesium spinel block of predetermined diameter, said method comprising the steps of:
generating plasma;
delivering particles of aluminum oxide and magnesium oxide into the plasma so as to melt the particles; and
depositing the melted particles onto a deposition substrate while moving the deposition substrate in three independent directions including rotation along its vertical axis, back and forth translation motion along its horizontal axis, and pull down motion along its vertical axis to produce the purified dense aluminum-magnesium spinel block.

9. The method of claim 8, wherein the aluminum oxide and magnesium oxide particles have a particle size ranging from 0.1 µm to 500 µm.

10. The method of claim 8, wherein the plasma is generated by induction with a high frequency generator.

11. The method of claim 8, wherein the purified dense aluminum magnesium spinel block has a purity level up to 99.999%.

12. The method of claim 8, wherein the melted particles form a liquid layer when deposited on the surface of the substrate.

13. The method of claim 8, wherein the particles further comprise doping material and the melted particles form a solid layer when deposited on the surface of the substrate.

14. The method of claim 13, wherein the doping material comprises Fe, Ni or Co.

15. A method for producing a purified dense zirconium oxide block of predetermined diameter, said method comprising the steps of:
generating plasma;
delivering zirconium oxide particles into the plasma so as to melt the particles; and
depositing the melted particles onto a deposition substrate while moving the deposition substrate in three independent directions including rotation along its vertical axis, back and forth translation motion along its horizontal axis, and pull down motion along its vertical axis to produce the purified dense zirconium oxide block.

16. The method of claim 15, wherein the zirconium oxide particles have a particle size ranging from 0.1 µm to 500 µm.

17. The method of claim 15, wherein the plasma is generated by induction with a high frequency generator.

18. The method of claim 15, wherein the purified dense zirconium oxide block has a purity level up to 99.999%.

19. The method of claim 15, wherein the melted particles form a liquid layer when deposited on the surface of the substrate.

20. The method of claim 15, wherein the particles further comprise doping material and the melted particles forms a solid layer when deposited on the surface of the substrate.

21. The method of claim 20, wherein the doping material comprises Y, Ce, Er, Mg, Fe, Ca or a mixture of two or more of the foregoing.

## Patentansprüche

1. Verfahren zur Herstellung eines gereinigten, kompakten Aluminiumoxidblocks mit vorbestimmtem Durchmesser, wobei das Verfahren die Schritte umfasst:
Erzeugen von Plasma,
Zuführen von Aluminiumoxidteilchen in das Plasma, um die Teilchen zu schmelzen, und
Abscheiden der geschmolzenen Teilchen auf ein Abscheidungssubstrat, während das Abscheidungssubstrat in drei unabhängigen Richtungen, einschließlich Rotation entlang seiner vertikalen Achse, rückwärts und vorwärts gerichteten Translationsbewegung entlang seiner horizontalen Achse und abwärts gerichteten Bewegung entlang seiner vertikalen Achse, bewegt wird, um den gereinigten, kompakten Aluminiumoxidblock herzustellen.

2. Verfahren nach Anspruch 1, wobei die Aluminiumoxidteilchen eine Teilchengröße von 0,1 µm bis 500 µm aufweisen.

3. Verfahren nach Anspruch 1, wobei das Plasma durch Induktion mit einem Hochfrequenzgenerator erzeugt wird.

4. Verfahren nach Anspruch 1, wobei der gereinigte, kompakte Aluminiumoxidblock einen Reinheitsgrad bis zu 99,999% aufweist.

5. Verfahren nach Anspruch 1, wobei die geschmolzenen Teilchen eine Flüssigkeitsschicht bilden, wenn sie auf der Oberfläche des Substrats abgeschieden werden.

6. Verfahren nach Anspruch 1, wobei die Teilchen weiter Dotierungsmaterial umfassen und die geschmolzenen Teilchen eine feste Schicht bilden, wenn sie auf der Oberfläche des Substrats abgeschieden werden.

7. Verfahren nach Anspruch 6, wobei das Dotierungsmaterial Ti, Cr, Mn, Ni, Fe, V oder eine Mischung von zwei oder mehr der vorstehend genannten umfasst.

8. Verfahren zur Herstellung eines gereinigten, kompakten Aluminium-Magnesium-Spinellblocks mit vorbestimmtem Durchmesser, wobei das Verfahren die Schritte umfasst:
Erzeugen von Plasma,
Zuführen von Aluminiumoxid- und Magnesiumoxidteilchen in das Plasma, um die Teilchen zu schmelzen, und
Abscheiden der geschmolzenen Teilchen auf ein Abscheidungssubstrat, während das Abscheidungssubstrat in drei unabhängigen Richtungen, einschließlich Rotation entlang seiner vertikalen Achse, rückwärts und vorwärts gerichteten Translationsbewegung entlang seiner horizontalen Achse und abwärts gerichteten Bewegung entlang seiner vertikalen Achse, bewegt wird, um den gereinigten, kompakten Aluminium-Magnesium-Spinellblock herzustellen.

9. Verfahren nach Anspruch 8, wobei die Aluminiumoxid- und Magnesiumoxidteilchen eine Teilchengröße von 0,1 µm bis 500 µm aufweisen.

10. Verfahren nach Anspruch 8, wobei das Plasma durch Induktion mit einem Hochfrequenzgenerator erzeugt wird.

11. Verfahren nach Anspruch 8, wobei der gereinigte, kompakte Aluminium-Magnesium-Spinellblock einen Reinheitsgrad bis zu 99,999% aufweist.

12. Verfahren nach Anspruch 8, wobei die geschmolzenen Teilchen eine Flüssigkeitsschicht bilden, wenn sie auf der Oberfläche des Substrats abgeschieden werden.

13. Verfahren nach Anspruch 8, wobei die Teilchen weiter Dotierungsmaterial umfassen und die geschmolzenen Teilchen eine feste Schicht bilden, wenn sie auf der Oberfläche des Substrats abgeschieden werden.

14. Verfahren nach Anspruch 13, wobei das Dotierungsmaterial Fe, Ni oder Co umfasst.

15. Verfahren zur Herstellung eines gereinigten, kompakten Zirkoniumoxidblocks mit vorbestimmtem Durchmesser, wobei das Verfahren die Schritte umfasst:
Erzeugen von Plasma,
Zuführen von Zirkoniumoxidteilchen in das Plasma, um die Teilchen zu schmelzen und
Abscheiden der geschmolzenen Teilchen auf ein Abscheidungssubstrat, während das Abscheidungssubstrat in drei unabhängigen Richtungen, einschließlich Rotation entlang seiner vertikalen Achse, rückwärts und vorwärts gerichteten Translationsbewegung entlang seiner horizontalen Achse und abwärts gerichteten Bewegung entlang seiner vertikalen Achse, bewegt wird, um den gereinigten, kompakten Zirkoniumoxidblock herzustellen.

16. Verfahren nach Anspruch 15, wobei die Zirkoniumoxidteilchen eine Teilchengröße von 0,1 µm bis 500 µm aufweisen.

17. Verfahren nach Anspruch 15, wobei das Plasma durch Induktion mit einem Hochfrequenzgenerator erzeugt wird.

18. Verfahren nach Anspruch 15, wobei der gereinigte, kompakte Zirkoniumoxidblock einen Reinheitsgrad bis zu 99,999% aufweist.

19. Verfahren nach Anspruch 15, wobei die geschmolzenen Teilchen eine Flüssigkeitsschicht bilden, wenn sie auf der Oberfläche des Substrats abgeschieden werden.

20. Verfahren nach Anspruch 15, wobei die Teilchen weiter Dotierungsmaterial umfassen und die geschmolzenen Teilchen eine feste Schicht bilden, wenn sie auf der Oberfläche des Substrats abgeschieden werden.

21. Verfahren nach Anspruch 20, wobei das Dotierungsmaterial Y, Ce, Er, Mg, Fe, Ca oder eine Mischung von zwei oder mehr der vorstehend genannten umfasst.

## Revendications

1. Une méthode de production de blocs denses d'alumine purifiée de diamètre prédéterminé, ladite méthode comprenant les étapes suivantes :
générer du plasma ;
introduire des particules d'alumine dans le plasma afin de les faire fondre ; et
déposer les particules fondues sur un substrat de dépôt en déplaçant le substrat de dépôt dans trois directions indépendantes comprenant un mouvement de rotation le long de son axe vertical, un mouvement de translation d'avant en arrière le long son axe horizontal, et un mouvement de traction de haut en bas le long de son axe vertical afin de produire le bloc dense d'alumine purifiée.

2. La méthode de la revendication 1, dans laquelle les particules d'alumine présentent une taille comprise dans une gamme allant de 0,1 µm à 500 µm.

3. La méthode de la revendication 1, dans laquelle le plasma est généré par induction avec un générateur haute fréquence.

4. La méthode de la revendication 1, dans laquelle le bloc dense d'alumine purifiée a un degré de pureté atteignant 99,999%.

5. La méthode de la revendication 1, dans laquelle les particules fondues forment une couche liquide lorsqu'elles sont déposées à la surface du substrat.

6. La méthode de la revendication 1, dans laquelle les particules comprennent en outre un matériau dopant et dans laquelle les particules fondues forment une couche solide lorsqu'elles sont déposées à la surface du substrat.

7. La méthode de la revendication 6, dans laquelle le matériel dopant contient du Ti, du Cr, du Mn, du Ni, du Fe, du V ou un mélange d'au moins deux des éléments précités.

8. Une méthode de production de blocs denses de spinelle d'aluminium-magnésium purifiée d'un diamètre prédéterminé, ladite méthode comprenant les étapes suivantes :
générer du plasma :
introduire des particules d'oxyde d'aluminium et d'oxyde de magnésium dans le plasma afin de les faire fondre ; et
déposer les particules fondues sur un substrat de dépôt en déplaçant le substrat de dépôt dans trois directions indépendantes comprenant un mouvement de rotation le long de son axe vertical, un mouvement de translation d'avant en arrière le long son axe horizontal, et un mouvement de traction de haut en bas le long de son axe vertical afin de produire le bloc dense de spinelle d'aluminium-magnésium purifiée.

9. La méthode de la revendication 8, dans laquelle les particules d'oxyde d'aluminium et d'oxyde de magnésium présentent une taille comprise dans une gamme allant de 0,1 µm à 500 µm.

10. La méthode de la revendication 8, dans laquelle le plasma est généré par induction avec un générateur haute fréquence.

11. La méthode de la revendication 8, dans laquelle le bloc dense de spinelle d'aluminium-magnésium purifiée a un degré de pureté atteignant 99,999%.

12. La méthode de la revendication 8, dans laquelle les particules fondues forment une couche liquide lorsqu'elles sont déposées à la surface du substrat.

13. La méthode de la revendication 8, dans laquelle les particules comprennent en outre un matériau dopant et dans laquelle les particules fondues forment une couche solide lorsqu'elles sont déposées à la surface du substrat.

14. La méthode de la revendication 13, dans laquelle le matériel dopant contient du Fe, du Ni ou du Co.

15. Une méthode de production de blocs denses d'oxyde de zirconium purifié de diamètre prédéterminé, ladite méthode comprenant les étapes suivantes :
générer du plasma :
introduire des particules d'oxyde de zirconium dans le plasma afin de les faire fondre ; et
déposer les particules fondues sur un substrat de dépôt en déplaçant le substrat de dépôt dans trois directions indépendantes comprenant un mouvement de rotation le long de son axe vertical, un mouvement de translation d'avant en arrière le long son axe horizontal, et un mouvement de traction de haut en bas le long de son axe vertical afin de produire le bloc dense d'oxyde de zirconium purifié.

16. La méthode de la revendication 15, dans laquelle les particules d'oxyde de zirconium présentent une taille comprise dans une gamme allant de 0,1 µm à 500 µm.

17. La méthode de la revendication 15, dans laquelle le plasma est généré par induction avec un générateur haute fréquence.

18. La méthode de la revendication 15, dans laquelle le bloc dense d'oxyde de zirconium purifié a un degré de pureté atteignant 99,999%.

19. La méthode de revendication 15 où les particules fondues forment une couche liquide lorsqu'elles sont déposées à la surface du substrat.

20. La méthode de la revendication 15, dans laquelle les particules comprennent en outre un matériau dopant et dans laquelle les particules fondues forment une couche solide lorsqu'elles sont déposées à la surface du substrat.

21. La méthode de la revendication 20, dans laquelle le matériel dopant contient du Y, du Ce, du Er, du Mg, du Fe, du Ca ou un mélange d'au moins deux des éléments précités.
